# EUROPÄISCHE PATENTANMELDUNG

(11) **EP 3 147 069 A1**
(43) Veröffentlichungstag der Anmeldung: **29.03.2017**
(21) Anmeldenummer: 15186587.0
(22) Anmeldetag: 24.09.2015
(51) Int. Cl.: B23K 26/34, B23K 15/00, C22C 1/08, F01D 5/14, B23K 101/00, B23K 103/16, B23K 103/18

(54) **VERFAHREN ZUM HERSTELLEN EINER HYBRIDEN LAUFSCHAUFEL EINER THERMISCHEN STRÖMUNGSMASCHINE DURCH AUFTRAGSCHWEISSEN**

(71) Anmelder: Siemens Aktiengesellschaft, 80333 München (DE)
(72) Erfinder: Brunhuber, Christian, 91275 Auerbach (DE); Deister, Frank, 47877 Willich (DE); Hanebuth, Henning, 85652 Pliening OT Gelting (DE); Ruhr, Thorsten, 46569 Hünxe (DE); Schneider, Heinz-Ingo, 85598 Baldham (DE); Voß, Simon, 46049 Oberhausen (DE); Walter, Steffen, 85667 Oberpframmern (DE)

(57) **Zusammenfassung**

Die Erfindung betrifft ein Verfahren zum Herstellen einer hybriden Laufschaufel einer thermischen Strömungsmaschine, bei dem ausgehend von einem Grundkörper aus metallischem porösem Schaum, dessen Außenkontur der Schaufelblattkontur der final herzustellenden Laufschaufel weitestgehend entspricht, eine Laufschaufel gefertigt werden kann. Um ein Verfahren bereitzustellen, welches die Fertigungszeiten einer Laufschaufel weiter verkürzt und mit dem eine besonders leichte sowie hinreichend feste Laufschaufel hergestellt werden kann, wird vorgeschlagen, dass nach dem Herstellen (S1) des Grundkörpers auf diesem ein zusätzliches metallisches Material mittels eines Auftragsschweißverfahrens zur Herstellung einer im Wesentlichen geschlossenen Hülle um den Grundkörper herum aufgebracht (S2) wird, derartig, dass nach Abschluss des Aufbringens des zusätzlichen metallischen Materials die Außenkontur der Hülle größtenteils, insbesondere überall, die Abmaße der final herzustellenden Laufschaufel übersteigt, wonach ein Teil des aufgetragenen metallischen Materials der Hülle abgetragen (S3) wird, um die finale Kontur der Laufschaufel maßhaltig herzustellen.

## Beschreibung

Die Erfindung betrifft ein Verfahren zum Herstellen einer hybriden Laufschaufel einer thermischen Strömungsmaschine.

Thermische Strömungsmaschinen, häufig auch als Turbomaschinen bezeichnet, sind im Stand der Technik in vielfältiger Weise bekannt. Zu den höchst belasteten Bauteilen der Turbomaschinen zählen deren Laufschaufeln aufgrund der auf sie einwirkenden hohen Zentrifugalkräfte. Insbesondere bei Dampfturbinen treten im Betrieb oftmals aufgrund der hohen Drehzahlen so hohe mechanische Belastungen auf, dass die spezifische Festigkeit ihres Standardwerkstoffes Stahl nicht mehr ausreicht, um einen sicheren Betrieb der Dampfturbine zu gewährleisten. Es muss dann beispielsweise auf höherwertigere Materialien für Laufschaufeln und/oder deren Rotoren zurückgegriffen werden. Dies gilt insbesondere für Niederdruck-Dampfturbinen, bei denen es aufgrund der sukzessiven Entspannung des Arbeitsmediums Dampf zu sehr großen Strömungsquerschnitten und daher zu sehr langen Schaufelblättern von einer Länge von bis zu zwei Metern kommt. Diese enorm langen Laufblätter führen zu entsprechend hohen Belastungen in den Schaufeln selber und auch im Rotor und somit zu dem Bedürfnis, leichtere Laufschaufeln bereitzustellen, die jedoch bei gleichbleibender Festigkeit und Lebensdauer ebenso preiswert und schnell herstellbar sein sollen.

Vergleichbare Probleme treten auch bei den hinteren Reihen einer Turbineneinheit von Gasturbinen oder bei den vorderen Reihen von Axialverdichtern auf.

Ein bekanntes Verfahren zum Herstellen einer leichten Laufschaufel offenbart die US 2007/0243069 A1. Gemäß dem bekannten Verfahren wird zuerst eine Vorform der Laufschaufel aus metallischem Schaum hergestellt, wonach anschließend zwei metallische Werkstücke hergestellt werden, die als Schaufelhülle dienen. Die Vorform wird zwischen den beiden Schaufelhüllen innerhalb einer Pressform angeordnet, wonach dann die drei Elemente durch einen sogenannten Bonding-Prozess zu einer Laufschaufel geformt und verbunden werden. Dieser Prozess hat sich jedoch als recht aufwändig dargestellt.

Daneben ist aus der US 2012/0163982 A1 ein Verfahren zum Herstellen von Laufschaufeln bekannt, bei dem auf einen Kern aus metallischem Schaum eine Hülle aus einem Kompositmaterial aufgebracht wird. Als Kompositmaterial wird beispielsweise Polyamid verwendet. Auch dieses Herstellverfahren erscheint recht aufwändig zu sein.

Aufgabe der Erfindung ist daher die Bereitstellung eines Verfahrens zum Herstellen einer hybriden Laufschaufel, vorzugsweise mit einem vergleichsweise langen Schaufelblatt, welches schnell und kostengünstig durchführbar ist und zu einer leichten wie langlebigen Laufschaufel führt.

Die der Erfindung zugrundeliegende Aufgabe wird mit einem Verfahren zum Herstellen einer hybriden Laufschaufel einer thermischen Strömungsmaschine gelöst, bei dem die nachfolgenden Schritte aufeinanderfolgend ausgeführt werden:
a) Herstellen eines Grundkörpers aus metallischem porösem Schaum, dessen Außenkontur der Schaufelblattkontur der final herzustellenden Laufschaufel im wesentlichen entspricht, jedoch von den Abmaßen kleiner ist als das der herzustellenden Laufschaufel,
b) Aufbringen eines zusätzlichen metallischen Materials auf den Grundkörper mittels eines Auftragsschweißverfahrens zur Herstellung einer im Wesentlichen geschlossenen Hülle um den Grundkörper herum, derartig, dass nach Abschluss des Aufbringens des Materials die Außenkontur der Hülle größtenteils, insbesondere überall, die Abmaße der final herzustellenden Laufschaufel übersteigt und
c) lokales teilweises Abtragen der aus dem metallischen Material bestehenden Hülle, um die finale Schaufelkontur der Laufschaufel herzustellen.

Erfindungsgemäß soll die nach diesem Verfahren hergestellte Laufschaufel eine metallische Hülle aufweisen, die im Inneren von einer porösen metallischen Struktur ausgefüllt ist. Letztere ist der die mechanische Last tragende Kern der Laufschaufel, welcher zudem die Hülle zusätzlich gegen mechanische Belastungen wie Zentrifugalkraft und Biegeschwingungen stabilisiert. Die Hülle schirmt die poröse metallische Struktur vor dem Arbeitsmedium vollständig ab. Im Detail kann die Grundkomponente aus metallischem Schaum durch Fräsen, Zuschneiden und dergleichen so geformt werden, dass die Außenkontur des Grundkörpers im Wesentlichen proportional der Kontur des Schaufelblatts der final herzustellenden Laufschaufel entspricht, jedoch an den meisten Positionen geringfügig kleinere Abmaße aufweist. Alternativ zum spanenden Herausarbeiten des Grundkörpers aus einem Rohling aus metallischem porösem Schaum kann die Herstellung des metallischen Schaums auch in einer Form durch Ausschäumen ablaufen.

Nach dem Herstellen des Grundkörpers wird auf dessen Außenkontur mittels eines Auftragsschweißverfahrens, insbesondere mittels eines Energie- und insbesondere mittels eines Laser-Auftragsschweißverfahrens (welches im Englischen als "Laser-Metal-Deposition"-Verfahren bezeichnet wird) ein zusätzliches metallisches Material aufgetragen und so die Laufschaufel weiter aufgebaut. So werden zum Beispiel Überhänge, ein Schaufelfuß, besondere Spitzen-Geometrien und weitere strukturelle Bestandteile der Laufschaufel dem Grundkörper schrittweise und ggf. schichtweise hinzugefügt.

Die Porosität des Grundkörpers soll derart eingestellt sein, dass das per Auftragsschweißen aufgebrachte zusätzliche metallische Material in die poröse Oberfläche gut eindringen und verschmelzen kann, um an diesem gut zu haften. Dennoch sollten die Poren des Grundkörpers fein genug sein, damit die Oberfläche möglichst homogen und ein gleichmäßiger Auftrag des metallischen Materials gewährleistet ist. Das per Auftragsschweißen aufgetragene metallische Material wird üblicherweise in einer derartigen Materialstärke ggf. schichtweise aufgetragen, dass nach Abschluss des Schritts b) die Außenkontur der Hülle größtenteils, vorzugsweise überall, die Abmaße der final herzustellenden Laufschaufel übersteigt, also vorzugsweise überall ein Übermaß aufweist. In einem danach durchzuführenden Herstellungsschritt wird ein Teil des durch Auftragsschweißen dem Grundkörper hinzugefügten zusätzlichen metallischen Materials wieder abgetragen werden, um so auf diese Weise die maßhaltige Endkontur der Laufschaufel zu erzeugen. Zum Abtragen werden die üblichen Verfahren eingesetzt, insbesondere werden jedoch spanende oder schleifende Abtragverfahren eingesetzt. Andere hier nicht genannte Verfahren sind ebenso verwendbar. Dadurch kann eine hybride Laufschaufel mit hoher Genauigkeit in ihren Abmaßen hergestellt werden.

Hybrid bedeutet dabei, dass das Material des Grundkörpers und das Material der Hülle verschieden sein können und stoffschlüssig miteinander verbunden sind.

Vorzugsweise sollen für das Material des Grundkörpers und für das anschließend aufgebrachte metallische Material derartige Materialen wie Titanlegierungen, intermetallische Verbindungen wie Titan-, Eisen-, oder Nickelaluminide, Aluminiumlegierungen ausgewählt werden, so dass die so gefertigte Laufschaufel eine hohe spezifische Festigkeit bei geringer relativer Dichte erreichen kann. Im Detail bieten sich für Dampfturbinen-Anwendungen Titan-Legierungen und für Gasturbinen-Anwendungen warmfeste Stähle und Nickel-Legierungen an, wobei insbesondere die beschriebene Leichtbaukomponente den Wechsel auf ein günstigeres Material unterstützt, z.B. von Titan auf warmfesten Stahl bei der Dampfturbine. Damit könnte eine hohe Gewichtseinsparung im Vergleich zum Standardmaterial Stahl erzielt werden.

Außerdem soll der Grundkörper möglichst stabil gegen diejenige thermische Belastung sein, die während des Auftragsschweißverfahrens im Grundkörper auftreten. Dies wird beispielsweise dadurch erreicht, dass das Material des Grundkörpers einen höheren Schmelzpunkt als das metallische Material aufweist, welches beim Auftragsschweißverfahren aufgebracht wird.

Des Weiteren ist bevorzugt, dass der Grundkörper im Bereich des Schaufelblatts eine ausreichende, minimale Wandstärke aufweist, so dass trotz der thermischen Einflüsse während des Aufbringens der Hülle die Kontur und Form des Grundkörpers aufrechterhalten bleibt.

Schlussendlich ist bevorzugt, dass das per Auftragsschweißen aufgetragene zusätzliche metallische Material mechanisch stabil ist und insbesondere eine hohe Korrosionsbeständigkeit, Oxidationsbeständigkeit und/oder Erosionsbeständigkeit aufweist. Mithin eignen sich warmfeste Stähle, Titan, Titanlegierungen oder CoCr-haltige Stähle als zusätzliches metallisches Material für die Hülle.

Besonderer Vorteil des Einsatzes des Auftragsschweißverfahrens ist, dass die äußere Hülle vergleichsweise gut an dem Grundkörper verbunden ist und an diesem anhaftet.

Ein weiterer Vorteil ist, dass die dementsprechend hergestellte Laufschaufel unter Aufrechterhaltung einer weiterhin ausreichenden Festigkeit vergleichsweise leicht ist.

Auch lässt sich mit dem Verfahren vergleichsweise schnell eine entsprechende Laufschaufel herstellen, insbesondere im Vergleich zu einem Aufbau mit additiver Fertigung. Deren Aufbau-Geschwindigkeiten sind derzeit eher gering im Vergleich zum Auftragsschweißen.

Gemäß einer weiteren vorteilhaften Ausgestaltung werden vor oder nach dem Schritt c) in die Hülle Löcher eingebracht, die im Grundkörper enden. Die in der Hülle angeordneten Löcher können dann als Zufuhr- und/oder Ausblaselöcher für ein in der Laufschaufel strömendes Kühlmedium dienen, so dass die Laufschaufel kühlbar ausgestaltet ist und somit insbesondere in einer Gasturbine angewendet werden kann. Dabei kann an demjenigen Bereich des Grundkörpers, an dem das Zufuhrloch bzw. die Zufuhrlöcher für Kühlmittel, beispielsweise Kühlluft, vorgesehen ist bzw. sind, das Auftragen des metallischen Materials entfallen. Ebenso frei zuhalten von metallischem Material wären ggf. andere Stelle des Grundkörpers, je nach Ausgestaltung und Einsatzgebiet der fertigen Laufschaufel. Beispiele für derartige Stellen könnten kleinere Bereiche der Laufschaufelspitze oder einer Hinterkante des Schaufelblatts, insbesondere bei Gasturbinen-Laufschaufeln sein.

Gemäß einer weiteren vorteilhaften Ausgestaltung kann die Herstellung des metallischen Schaums für den Grundkörper in einer Form durch Ausschäumen ablaufen. Bei Verwendung von in der Form angeordneten Kernen (vergleichbar mit den Gusskernen einer gegossenen Turbinenschaufel) ist es dann möglich, das letztere nach dem Ausschäumen der Form und dem Entfernen der Kerne im Grundkörper eine innere Hohlstruktur hinterlassen, durch welche im Betrieb Kühlmittel in das Schaufelinnere geleitet werden kann. Das Kühlmittel kann anschließend durch den vorzugweise offenen porösen metallischen Schaum hindurch und durch die in der Hülle angeordneten offenen Bohrungen aus der Laufschaufel austreten. Während der Durchströmung der Laufschaufel wird diese vom Kühlmittel wirksam gekühlt. Mithin ist es von Vorteil, wenn zur Herstellung einer kühlbaren Laufschaufel für deren Grundkörpers ein metallischer Schaum mit einer offenen Porosität verwendet wird.

Bei einer Verwendung von einem geschlossenporigen metallischen Schaum für den Grundköper sollten die sich durch die Hülle erstreckenden Löcher bis in die innere Hohlstruktur erstrecken, um eine Durchströmung der Laufschaufel mit Kühlmittel zu gewährleisten.

Anstelle oder ergänzend zur inneren Hohlstruktur im Grundkörper können an dessen Außenkontur nutenartige Vertiefungen vorgesehen sein. Die Vertiefungen, die nachträglich oder gleichzeitig mit der Herstellung des Grundkörpers geformt werden können, werden beim Auftragen der Hülle nicht vollständig aufgefüllt, sondern mittels einer Schiefstellung des Schweißkopfes unter Bildung eines hüllennahen Hohlraums nur überdeckt. In der fertigen Turbinenschaufel dienen diese als hüllennahe Kühlmittelkanäle.

Zweckmäßigerweise kann das Verfahren zum Herstellen einer Verdichterlaufschaufel, einer Dampfturbinenlaufschaufel, einer Gasturbinenlaufschaufel oder auch einer Fan-Laufschaufel einer Flugzeug-Gasturbine verwendet werden. Weitere Einsatzgebiete sind möglich.

In einer speziellen Ausgestaltung des Verfahrens ist vorgesehen, dass ein Energiestrahl-Auftragsschweißverfahren verwendet wird, beispielsweise ein Laser- oder Elektronenstrahl-Auftragsschweißverfahren. Diese beiden Verfahren besitzen gegenüber den Standard-Schweißverfahren den Vorteil, dass insbesondere mit dem Elektronenstrahl-Schweißverfahren höhere Auftragsraten oder die Verarbeitung spezieller Materialien ermöglicht werden kann.

Insgesamt betrifft die Erfindung somit ein Verfahren zum Herstellen einer hybriden Laufschaufel einer thermischen Strömungsmaschine, bei dem ausgehend von einem Grundkörper aus metallischem porösem Schaum, dessen Außenkontur der Schaufelblattkontur der final herzustellenden Laufschaufel weitestgehend entspricht, eine Laufschaufel gefertigt werden kann.

Die Begriffe "final herzustellende Laufschaufel" bzw. "finale Schaufelkontur" werden in dieser Anmeldung als Synonym verwendet und bedeuten dabei, dass eine derartige Laufschaufel den von einem Konstrukteur in einer Spezifikation angegeben Abmaßen - unter Nicht-Berücksichtigung der Toleranzen des Abtragverfahrens - entspricht.

Um ein Verfahren bereitzustellen, welches die Fertigungszeit zum Herstellen einer Laufschaufel weiter verkürzt und mit dem eine besonders leichte sowie hinreichend feste Laufschaufel hergestellt werden kann, wird vorgeschlagen, dass nach dem Herstellen des Grundkörpers auf diesem ein zusätzliches metallisches Material mittels eines Auftragsschweißverfahrens zur Herstellung einer im Wesentlichen geschlossenen Hülle um den Grundkörper herum aufgebracht wird, derartig, dass nach Abschluss des Aufbringens des zusätzlichen metallischen Materials die Außenkontur der Hülle größtenteils, insbesondere überall die Abmaße der final herzustellenden Laufschaufel übersteigt, wonach ein Teil des aufgetragenen metallischen Materials der Hülle abgetragen wird, um die finale Kontur der Laufschaufel maßhaltig herzustellen.

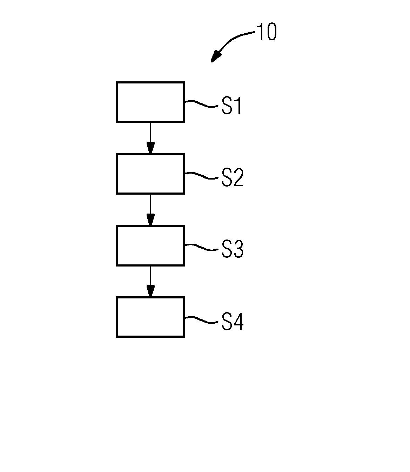

Die voran beschriebene Erfindung wird im Nachfolgenden beispielhaft beschrieben. Es zeigt die einzige Figur ein Fließdiagramm einer beispielhaften Ausführungsform eines Verfahrens zur Herstellung einer Laufschaufel einer thermischen Strömungsmaschine.

Die Herstellung einer hybriden Laufschaufel einer thermischen Strömungsmaschine wird gemäß den Schritten des Fließdiagramms durchgeführt. In einem ersten Schritt S1 wird ein Grundkörper aus metallischem porösem Schaum hergestellt, dessen Außenkontur zumindest dem Schaufelblatt der final herzustellenden Laufschaufel im Wesentlichen, jedoch mit geringen Abmaßen entspricht. Nach Abschluss von Schritt S1 steht der Grundkörper zur weiteren Verarbeitung zur Verfügung.

Anschließend wird Schritt S2 durchgeführt, bei dem auf den Grundkörper mittels eines Auftragsschweißverfahrens ein zusätzliches metallisches Material aufgebracht wird, um so eine zumindest im Wesentlichen geschlossene Hülle um den Grundkörper herum herzustellen. Dabei wird derartig viel Material auf dem Grundkörper abgelagert, dass nach Abschluss des Aufbringens des zusätzlichen metallischen Materials die Außenkontur der Hülle größtenteils, insbesondere überall, die Abmaße der final herzustellenden Laufschaufel geringfügig übersteigt. Ein übermäßiges Übermaß ist selbstverständlich zu vermeiden, um den Abtragsaufwand zur Herstellung der final herzustellenden Laufschaufel gering zu halten.

In einem dritten Schritt S3 wird dann zumindest teilweise von der Hülle Material wieder entfernt, um zur finalen und demnach spezifikationskonformen Schaufelkontur der Laufschaufel zu gelangen. Zum Abtragen können die bekannten Verfahren verwendet werden, insbesondere werden jedoch spanende oder schleifende Abtragverfahren eingesetzt. Erfahrungsgemäß soll die Hülle einer fertigen Laufschaufel im Bereich des Schaufelblatts eine Wandstärke von 2 mm bis 8 mm aufweisen. In Bereichen der Laufschaufel, die dem Schaufelfuß oder der Plattform zuzurechnen sind, sind die Wandstärken des durch Auftragsschweißen aufgebrachten metallischen Materials erfahrungsgemäß größer.

In einem vierten optionalen Schritt S4, welcher gemäß einem nicht dargestellten Ausführungsbeispiel auch vor dem Schritt S3 durchgeführt werden kann, werden in die Hülle Löcher eingebracht, die im porösen Schaum enden. Diese können als Zuund Abfuhröffnungen für Kühlmittel dienen.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren (10) zum Herstellen einer hybriden Laufschaufel einer thermischen Strömungsmaschine,
umfassend die aufeinander folgenden Schritte:
a) Herstellen (S1) eines Grundkörpers aus metallischem porösem Schaum, dessen Außenkontur der Schaufelblattkontur der final herzustellenden Laufschaufel im Wesentlichen entspricht,
b) Aufbringen (S2) eines metallischen Materials auf dem Grundkörper mittels eines Auftragsschweißverfahrens zur Herstellung einer im Wesentlichen geschlossenen Hülle um den Grundkörper herum, derartig, dass nach Abschluss des Aufbringens des metallischen Materials die Außenkontur der Hülle größtenteils, insbesondere überall die Abmaße der final herzustellenden Laufschaufel übersteigt und
c) teilweises Abtragen (S3) der aus dem metallischen Material bestehenden Hülle, um die finale Schaufelkontur der Laufschaufel herzustellen.

2. Verfahren (10) nach Anspruch 1,
bei dem vor oder nach dem Schritt c) in die Hülle Löcher eingebracht werden, die im Grundkörper enden.

3. Verfahren (10) nach Anspruch 1 oder 2,
bei dem zur Herstellung des Grundkörpers ein Rohling aus metallischem porösem Schaum spanend bearbeitet wird oder der Grundkörper in einer Form geschäumt wird.

4. Verfahren (10) nach Anspruch 1, 2 oder 3,
bei dem das Material des Grundkörpers ein metallischer Schaum mit einer offenen Porosität ist.

5. Verfahren (10) nach einem der Ansprüche 1 bis 4,
bei dem die Hülle aus einem oxidationsbeständigen und/oder einem erosionsbeständigen Material besteht.

6. Verfahren (10) nach einem der Ansprüche 1 bis 5, verwendet zum Herstellen einer Verdichterlaufschaufel, einer Dampfturbinenlaufschaufel, einer Gasturbinenlaufschaufel oder eines Fans eines Flugzeugtriebwerks.
